Europäisches Patentamt

(19) European Patent Office

Office européen des brevets

(11) Publication number: **0 038 644**
**B1**

(12) **EUROPEAN PATENT SPECIFICATION**

(45) Date of publication of patent specification: **02.10.85**

(21) Application number: **81301488.3**

(22) Date of filing: **07.04.81**

(51) Int. Cl.⁴: **B 29 C 69/00**

(54) **A resin extruder for connecting electric cables.**

(30) Priority: **17.04.80 JP 52771/80**

(43) Date of publication of application:
**28.10.81 Bulletin 81/43**

(45) Publication of the grant of the patent:
**02.10.85 Bulletin 85/40**

(84) Designated Contracting States:
**CH DE FR GB LI NL SE**

(56) References cited:
**GB-A-1 056 851**
**US-A-3 259 940**
**US-A-3 841 812**

(73) Proprietor: **SUMITOMO ELECTRIC INDUSTRIES LIMITED**
**No. 15, Kitahama 5-chome Higashi-ku**
**Osaka-shi Osaka-fu (JP)**

(72) Inventor: **Shigeru, Kato c/o Sumitomo Electric Ind.LTD.**
**Osaka Works, No. 1-3 Shimaya 1-chome**
**Konohana-ku, Osaka-shi, Osaka (JP)**
Inventor: **Hiromi, Yabutani c/o Sumitomo Electric Ind. LTD.**
**Osaka Works, No. 1-3 Shimaya 1-chome**
**Konohana-ku, Osaka-shi, Osaka (JP)**
Inventor: **Kojiro, Ishise c/o Sumitomo Electric Ind. LTD.**
**Osaka Works, No. 1-3 Shimaya 1-chome**
**Konohana-ku, Osaka-shi, Osaka (JP)**

(74) Representative: **Roberts, Peter William et al**
**Marks & Clerk Alpha Tower Suffolk Street Queensway**
**Birmingham B1 1TT (GB)**

## Description

The present invention relates to a synthetic resin extruder for connecting electric cables.

Often high or ultrahigh voltage cables are laid underground so that connections between cable segments must be carried out in a very narrow place, such as a manhole or underground cavity.

In order to form an insulating layer around a joint between high or ultrahigh voltage cable segments formed with insulating layers of polyethylene or crosslinked polyethylene, it has been the practice to wind a tape of polyethylene, crosslinked polyethylene or the like about the joint or to form a layer of resin around the joint using a mold and with the resin heated under pressure to bond it integrally with the insulating layers of the cables. The electrical performance of a high or ultrahigh voltage cable is greatly reduced by the inclusion of foreign matter in its insulating material. It is, therefore, most desirable to cast an insulating layer using a mold which is least likely to cause any such inclusion.

Even using casting with a mold as described above, however, it is impractical to supply polyethylene or crosslinked polyethylene from an extruder on the ground to a joint in a manhole. Therefore it is necessary to install the extruder close to the joint in the manhole or underground cavity. A satisfactory reduction in size of the extruder and any equipment associated therewith for satisfying such a requirement has hitherto not been achieved.

US—A—3841812 discloses a portable extruder for foamed plastics wherein a screw-extruder is driven by a hydraulic motor connected by a line to a hydraulic unit but there is no teaching to use such an extruder for forming an insulating layer around a joint between cables.

According to one aspect of the present invention, there is provided a resin extruder comprising a main body comprising a screw extruder and a hydraulic motor for driving said screw extruder; a hydraulic unit separate from said main body for energising the hydraulic motor in use to drive the screw extruder; and a line connecting said hydraulic motor to said hydraulic unit; characterised in that, to facilitate use of the extruder to form an insulating layer around a joint between cables in an underground cavity, the main body is dimensioned so as to be passable through an entrance to the underground cavity and to be positioned in the vicinity of the joint, the hydraulic unit is positioned, in use, above the ground, and the line connecting said hydraulic motor to said hydraulic unit is a pressure hose.

Also according to the present invention, there is provided a method of forming an insulating layer around a joint between underground electric cables comprising the steps of:—

(1) passing a resin extruder main body through an entrance to an underground cavity and positioning the main body in the vicinity of said joint, said main body comprising a screw extruder and a hydraulic motor for driving said screw extruder;

(2) positioning a hydraulic unit in the vicinity of said entrance externally of said underground cavity; and

(3) operating said hydraulic unit so as to supply hydraulic fluid to said hydraulic motor via a pressure hose which passes through said entrance and which extends between said hydraulic unit and said hydraulic motor, whereby energization of the motor causes the screw extruder to extrude resin to form said insulating layer around said joint. With this arrangement, it is possible to perform the necessary work satisfactorily in a narrow hole in the ground or in a narrow space in a manhole. In view of the requirement that the inclusion of any void should be avoided, it is desirable to complete the casting operation in a single step. However, it is difficult to employ an injection molding machine or a ram extruder for the formation of a thick insulating layer on ultrahigh voltage cables since this requires the use of a large machine.

When a mold is used for casting polyethylene or the like containing a crosslinking agent, the mold should be preheated so that the resin will not cool in the mold. However, if the mold is heated to too high a temperature, the insulating layers of crosslinked polyethylene on the cables will be deformed. There is also a limitation on the temperature to which the resin to be cast and the mold can be preheated since the crosslinking agent is likely to undergo decomposition when the polyethylene containing it is cast if the temperature is too high. If an overly long period of time is used for casting the resin, it is likely that the resin may cool and solidify on the mold wall or the interfacial area between the cables and the resin, resulting in the formation of voids. This problem can be overcome if the casting speed is sufficiently high as to ensure that casting is completed before the material cools too much. For example, it is necessary to use a casting speed of at least about 8 kg/h for application to 154 KV, 275 KV or like ultrahigh voltage cables insulated with crosslinked polyethylene. Previously, it has been necessary to use an extruder having a cylinder diameter of at least 40 mm in order to prevent overly high temperature elevation of the resin and to obtain a satisfactorily high casting speed. This requirement can be met only by an ordinary screw extruder which is too large in size and weight to be carried into a manhole or underground cavity.

With the intention of overcoming the above-noted drawbacks, a resin extruder according to the present invention has been proposed.

Preferably, the main body is dimensioned so that it can pass through a manhole.

Electrical cables can be brought to the main body and an electric heating device provided in the main body. Also cooling means can be provided for the exterior of the main body, such as by providing a cooling jacket around the main body with cooling liquid being passed through the cooling jacket.

In the accompanying drawings:

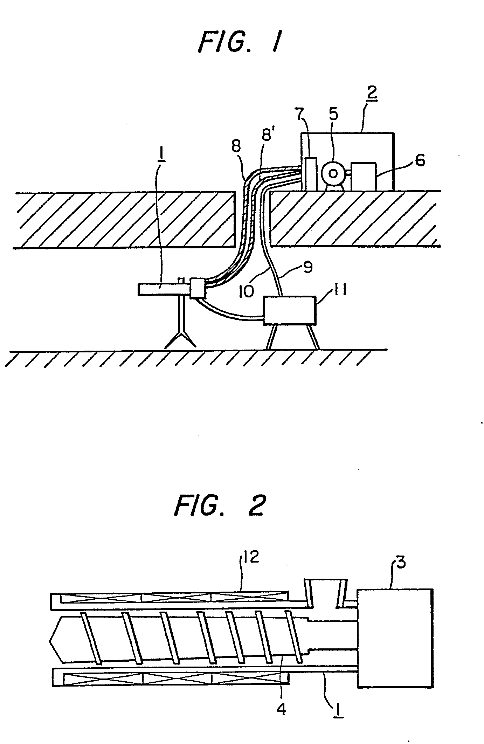

Figure 1 is a sectional view of a resin extruder according to a preferred embodiment of the invention; and

Figure 2 is a sectional view of the main body of the extruder shown in Figure 1.

Referring to the drawings, the resin extruder of the preferred embodiment includes a main body 1 and a hydraulic unit 2. The main body 1 includes a hydraulic motor 3 which rotates a screw 4 within a cylinder. The hydraulic unit 2 is composed of a hydraulic pump 5 for pressurizing and circulating oil for actuating the hydraulic motor 3, an oil tank 6 and a regulator 7 for controlling the rate at which the oil is circulated. The oil under pressure is fed to the hydraulic motor 3 through a pressure hose 8 and returned into the oil tank 6 through a pressure hose 8'. The rotating speed of the screw 4 is controlled by controlling the rate at which the oil is circulated. A line 9 supplies electric current to a heater 12 for heating a mold (not shown) which is used for casting a joint. The heater 12 also heats the extruder cylinder. A line 10 supplies electric current for controlling the hydraulic system including the hydraulic pump 5. The lines 9 and 10 are connected through a control panel 11 positioned close to the main body 1 of the extruder.

In operation, the hydraulic unit 2 is installed on the ground above a manhole or cavity and the control panel and the main body of the extruder are carried into the manhole or cavity so that the extrusion and casting of the resin with the extruder may be observed as the work proceeds. According to the invention, it is possible to construct an extruder having a cylinder diameter of 65 mm and an L/D ratio of 20 (L is the length of the cylinder and D is its inside diameter) and including a main body which is small enough to permit insertion through an ordinary manhole and which weighs only about 100 kg. With an extruder of this size and weight, it is indeed possible to carry out the required work in the confines of a manhole.

Temperature control for the cylinder of the main body of the extruder is not only effected by a heater but also includes provisions for cooling in order to prevent generation of heat in the resin being extruded. For cooling purposes, it is possible to employ air cooling by an ordinary fan. However, since the temperature rise in the fan during the operation of the extruder is likely to adversely affect the working environment, it is more desirable to provide a cooling jacket through which water or oil is circulated. If such a water or oil cooling system is employed, it is possible to combine a unit for cooling the water or oil being circulated with the hydraulic unit and to install it on the ground.

In order to prove the advantages of the extruder according to this invention, comparative tests have been conducted on a ram extruder, an ordinary type of extruder having a cylinder diameter of 32 mm, and an extruder constructed according to the invention having a cylinder diameter of 65 mm for casting a 30 mm thick insulating layer of polyethylene containing a crosslinking agent around the joint between crosslinked polyethylene insulated cables having an insulating layer thickness of 20 mm and a conductor cross-sectional area of 1000 mm². The results are shown in Table 1.

TABLE 1

| | Comparative Example 1 | Comparative Example 2 | Comparative Example 3 | Example of this invention |
|---|---|---|---|---|
| **Extruder** | | | | |
| Type | Ram extruder | Screw extruder cylinder dia. 32 mm L/D=20 | Same as Comparative Example 2 | Screw extruder cylinder dia. 65 mm L/D=20 |
| Drive | Hydraulic piston | Electric motor | Same as Comparative Example 2 | Hydraulic motor |
| Extruder dimensions (main body) | 500 mm wide 500 mm high 2100 mm long 500 kg in weight | 200 mm wide 800 mm high 1000 mm long 170 kg in weight | Same as Comparative Example 2 | 150 mm wide 150 mm high 1500 mm long 100 kg in weight |
| **Casting conditions** | | | | |
| Rotational speed of screw | — | 30 rpm | 80 rpm | 30 rpm |
| Casting speed | 10 kg/h | 5 kg/h | 12 kg/h | 20 kg/h |
| Temperature of resin being cast | 122°C | 130°C | 146°C | 130°C |
| Voids in the insulating layer for the joint | No voids | Voids present | No voids | No voids |
| Defects on cross-linked polyethylene | Some defects | None | Growing polyethylene Umber, and migrating into the joint | None |
| Transportation into a manhole | Impossible | Impossible | Impossible | Possible |

As is clear from Table 1, the ram extruder is larger than the apparatus of the invention in width, height, length and weight and has a lower casting speed while the ordinary screw extruder is larger than the apparatus of the invention in height and weight and has a lower casting speed. Thus, it can be concluded that the apparatus of the invention is more suitable than any other apparatus for use in a manhole or cavity.

As is clear from the foregoing description, the invention provides a highly reliable apparatus which ensures accurate formation of insulation for a joint between high or ultrahigh voltage power cables, and which is easy to transport to, and install at the workplace.

## Claims

1. A resin extruder comprising a main body (1) comprising a screw extruder and a hydraulic motor (3) for driving said screw extruder; a hydraulic unit (2) separate from said main body (1) for energising the hydraulic motor (3) in use to drive the screw extruder; and a line connecting said hydraulic motor (3) to said hydraulic unit (2); characterised in that, to facilitate use of the extruder to form an insulating layer around a joint between cables in an underground cavity, the main body (1) is dimensioned so as to be passable through an entrance to the underground cavity and to be positioned in the vicinity of the joint, the hydraulic unit (2) is positioned, in use, above the ground, and the line connecting said hydraulic motor (3) to said hydraulic unit (2) is a pressure hose (8, 8').

2. An extruder as claimed in claim 1, further comprising means (11) for electrically controlling said hydraulic unit (2), said means (11) including a control panel positioned, in use, in the vicinity of the main body (1) and an electric line (10) interconnecting the panel and the hydraulic unit.

3. An extruder as claimed in claim 1 or 2, further comprising means (12) for electrically heating said main body (1) of said extruder, and means for cooling said main body of said extruder, said cooling means comprising a cooling jacket on said main body and means for passing a cooling liquid through said cooling jacket.

4. An extruder as claimed in any one of claims 1 to 3, wherein said hydraulic unit (2) includes a hydraulic pump (5) for pressurizing and circulating hydraulic fluid for actuating said hydraulic motor (3), an oil tank (6), and a regulator (7) for controlling the rate at which said hydraulic fluid is circulated.

5. An extruder as claimed in any preceding claim, wherein said screw extruder has a cylinder which has a diameter not exceeding 65 mm.

6. A method of forming an insulating layer around a joint between underground electric cables comprising the steps of:—

(1) passing a resin extruder main body (1) through an entrance to an underground cavity and positioning the main body (1) in the vicinity of said joint, said main body (1) comprising a screw extruder and a hydraulic motor (3) for driving said screw extruder;

(2) positioning a hydraulic unit (2) in the vicinity of said entrance externally of said underground cavity; and

(3) operating said hydraulic unit (2) so as to supply hydraulic fluid to said hydraulic motor (3) via a pressure hose (8, 8') which passes through said entrance and which extends between said hydraulic unit (2) and said hydraulic motor (3), whereby energization of the motor (3) causes the screw extruder to extrude resin to form said insulating layer around said joint.

## Patentansprüche

1. Kunststoff-Strangpresse mit einem Hauptkörper (1), welcher eine Schnecken-Strangpresse und einen hydraulischen Motor (3) für den Antrieb der Schnecken-Strangpresse aufweist, einer von dem Hauptkörper getrennten Hydraulikeinheit (2) für die Speisung des hydraulischen Motors (3) im Betrieb zum Antreiben der Schnecken-Strangpresse, und mit einer den hydraulischen Motor (3) mit der Hydraulikeinheit (2) verbindende n Leitung, dadurch gekennzeichnet, daß zur Erleichterung der Verwendung der Strangpresse für die Bildung einer Isolierschicht um eine Verbindung zwischen Kabeln in einem Untergrund-Hohlraum der Hauptkörper (1) so dimensioniert ist, daß durch einen Eingang hindurch in den Untergrund-Hohlraum einführbar und in der Nähe der Verbindung positionierbar ist, daß die Hydraulikeinheit (2) im Gebrauch übergrund angeordnet ist und daß die den hydraulischen Motor (3) mit der Hydraulikeinheit (2) verbindende Leitung ein Druckschlauch (8, 8') ist.

2. Strangpresse nach Anspruch 1, ferner umfassend eine Einrichtung (11) für die elektrische Steuerung der Hydraulikeinheit (2), wobei die genannten Einrichtung (11) ein Armaturenbrett aufweist, welches im Gebrauch in der Nähe des Hauptkörpers (1) angeordnet und über eine elektrische Leitung (10) mit der Hydraulikeinheit verbunden ist.

3. Strangpresse nach Anspruch 1 oder 2, ferner umfassend eine Einrichtung (12) zum elektrischen Beheizen des Hauptkörpers (1) der Strangpresse und eine Einrichtung zum Kühlen des Hauptkörpers der Strangpresse, wobei die Kühleinrichtung einen am Hauptkörper angeordneten Kühlmantel und Einrichtungen zum Hindurchleiten einer Kühlflüssigkeit durch den Kühlmantel aufweist.

4. Strangpresse nach einem der Ansprüche 1 bis 3, bei welcher die Hydraulikeinheit (2) eine hydraulische Pumpe (5) für die Druckumwälzung eines hydraulischen Fluids für die Speisung des hydraulischen Motors (3), einen Ölbehälter (6) und einen Regler (7) zum Steuern der Umwälzgeschwindigkeit des hydraulischen Fluids aufweist.

5. Strangpresse nach einem der vorstehenden Ansprüche, bei welcher die Schnecken-Strangpresse einen Zylinder hat, dessen Durchmesser nicht größer ist als 65 mm.

6. Verfahren zum Formen einer Isolierschicht um eine Verbindung zwischen untergrund verlaufenden elektrischen Kabeln, umfassen die Schritte:

(1) Einführen eines Hauptkörpers (1) einer Strangpresse durch einen Eingang hindurch in einen Untergrund-Hohlraum und positionieren des Hauptkörpers (1) in der Nähe der Verbindung, wobei der Hauptkörper (1) eine Schnecken-Strangpresse und einen hydraulischen Motor (3) für den Antrieb der Schnecken-Strangpresse aufweist.

(2) Positionieren einer Hydraulikeinheit (2) in der Nähe des Eingangs außerhalb des Untergrund-Hohlraums, und

(3) Betreiben der Hydraulikeinheit (2) für die Speisung des hydraulischen Motors (3) mit einem hydraulischen Fluid über einen durch den Eingang hindurchgeführten und sich zwischen der Hydraulikeinheit (2) und dem hydraulischen Motor (3) erstreckenden Druckschlauch (8, 8'), wodurch die Speisung des Motors (3) bewirkt, daß die Schnecken-Strangpresse ein Harz extrudiert, um die Isolierschicht um die Verbindung herum zu formen.

**Revendications**

1. Extrudeuse à résine comprenant un corps principal (1) qui comprend une extrudeuse à vis et un moteur hydraulique (3) servant à entraîner l'extrudeuse à vis; une unité hydraulique (2) séparée du corps principal (1) et destinée à alimenter le moteur hydraulique (3) en énergie pendant l'utilisation pour faire tourner l'extrudeuse à vis; et une canalisation reliant ledit moteur hydraulique (3) à ladite unité hydraulique (2), caractérisée en ce que, pour faciliter l'utilisation de l'extrudeuse pour la formation d'une couche isolante autour d'un joint formé entre des câbles dans une cavité souterraine, le corps principal (1) est dimensionné de manière qu'on puisse le faire passer à travers une entrée donnant dans la cavité souterraine et qu'on puisse le positionner dans le voisinage du joint, l'unité hydraulique (2) est positionnée en utilisation au-dessus du niveau du sol et la canalisation reliant ledit moteur hydraulique (3) à ladite unité hydraulique (2) est un tuyau à pression (8, 8').

2. Extrudeuse selon la revendication 1, comprenant en outre des moyens (11) servant à commander électriquement ladite unité hydraulique (2); lesdits moyens (11) comprenant un tableau de commande positionné pendant l'utilisation, dans le voisinage du corps principal (1), et une canalisation électrique qui relie le panneau à l'unité hydraulique.

3. Extrudeuse selon l'une des revendications 1 et 2, comprenant en outre des moyens (12) servant à chauffer électriquement ledit corps principal (1) de ladite extrudeuse, et des moyens servant à refroidir ledit corps principal de ladite extrudeuse, lesdits moyens de refroidissement comprenant une double paroi de refroidissement prévue sur ledit corps principal et des moyens servant à faire circuler un liquide de refroidissement dans ladite double paroi de refroidissement.

4. Extrudeuse selon l'une quelconque des revendications 1 à 3, dans laquelle ladite unité hydraulique (2) comprend une pompe hydraulique (5) servant à mettre sous pression et faire circuler un fluide hydraulique pour actionner ledit moteur hydraulique (3), un réservoir d'huile (6) et un régulateur (7) servant à régler le débit auquel ledit fluide hydraulique est mis en circulation.

5. Extrudeuse selon l'une quelconque des revendications précédentes, dans laquelle ladite extrudeuse à vis comprend un cylindre possédant un diamètre non supérieur à 65 mm.

7. Procédé de formation d'une couche isolante autour d'un joint formé entre des câbles électriques enterrés, comprenant les phases consistant à:

(1) faire passer un corps principal d'extrudeuse de résine (1) à travers une entrée donnant dans une cavité souterraine et positionner le corps principal (1) dans le voisinage dudit joint, ledit corps principal (1) comprenant une extrudeuse à vis et un moteur hydraulique (3) servant à entraîner ladite extrudeuse à vis;

(2) positionner une unité hydraulique (2) dans le voisinage de ladite entrée, à l'extérieur de ladite cavité souterraine; et

(3) mettre ladite unité hydraulique (2) en action de façon à envoyer du fluide hydraulique audit moteur hydraulique (3) par un tuyau à pression (8, 8') qui passe à travers ladite entrée et qui s'étend entre ladite unité hydraulique (2) et ledit moteur hydraulique (3) de sorte que l'alimentation du moteur (3) en énergie amène l'extrudeuse à vis à extruder la résine pour former ladite couche isolante autour dudit joint.

0 038 644

## FIG. 1

## FIG. 2